# EUROPEAN PATENT APPLICATION

(11) **EP 2 810 745 A1**
(43) Date of publication of application: **10.12.2014**
(21) Application number: 14155692.8
(22) Date of filing: 19.02.2014
(51) Int. Cl.: B25J 9/06, B25J 18/06, B25J 9/10

(54) **Multi-jointed arm assembly**

(30) Priority: 14.03.2013 GB 201304572
(71) Applicant: Rolls-Royce plc, London SW1E 6AT (GB)
(72) Inventor: Dong, Xin, Nottingham, NG9 2HX (GB); Axinte, Dragos, Nottingham, Nottinghamshire NG9 2TH (GB); Raffles, Mark, Nottingham, NG9 6HQ (GB); Kell, James, Nottingham, Nottinghamshire NG7 1AA (GB)
(74) Representative: Routledge, John

(57) **Abstract**

A multi-jointed robot arm (10). The robot arm 10 comprises at least first and second link members (20, 21) connected by a connection arrangement (26) and at least a first control cable (22). A first end (32) of the first control cable (22) engages with a first engagement point (41) of the first link member (20) and a first attachment (32) point of the second link member (21). A second end (36) of the first cable (22) engages with a second engagement point (43) of the first link member (20) spaced from the first engagement point (41), and a second attachment point (34) of the second link member (21) spaced from the first attachment point (32), the assembly (10) further comprising a first actuator (28) configured to selectively tension the first end (32) of the first control cable (22) such that the second link member (21) pivots toward a first side, and to selectively tension the second end (34) of the first control cable (22) such that the second link member (21) pivots toward a second side, wherein the connection arrangement (26) is arranged to pivot at a first pivot point (C) located substantially along a notional line extending between the first and second attachment points (32, 34), and to pivot at a second pivot point (D) extending between the first and second engagement points (41, 43).

## Description

### Field of the Invention

The present invention relates to a multi jointed assembly, particularly though not exclusively to a multi-jointed assembly for a robot arm.

### Background to the Invention

Multi-jointed robot arms comprising a robotically controlled arm on which a manipulator or tool can be placed on a distal end are known. Such arms comprise a plurality of discrete pivotable link members, which pivot relative to each other to change the position of the distal end of the arm. A plurality of pivotable link members may be arranged in segments, such that each segment can be independently manipulated.

In general, in prior multi-link robot arms, there is a compromise between the diameter to length ratio, the payload capability (i.e. the force that can be applied at the distal end of the arm) and the flexibility (i.e. the range of angles that each joint can move to) of the arm. In particular, it is difficult to produce an arm having a relatively long length and small diameter, suitable for use within a gas turbine engine for example, while having a sufficient payload capability to enable tools such as polishing and burnishing tools to be mounted and used at the distal end. For example, typical prior multi-link robot arms for aerospace applications may have an end load capability of up to 1 kg, and a length up to 1 to 2 metres, but have a diameter greater than 40mm and a flexibility of only up to ± 11° per joint. In one example, where the robot arm is to be used for in situ repair of an internal component of a gas turbine engine, the robot arm must be capable of supporting a load of at least 200 g at its distal end, while having a small diameter (<30 mm), long length (>1200 mm) and great flexibility (± 90° between adjacent segments). In some applications, each segment must be controllable individually. This requires at least three control cables, and three actuators for each segment. Consequently, the diameter of the arm must be relatively large, particularly at the proximal end.

The cables are tensioned against an attachment point on a distal joint of the respective segment by actuators provided in a head unit provided at the proximal end of the arm. As each cable must be operated independently to provide movement in two degrees of freedom for each segment, three actuators are required for each segment. Since actuators are relatively bulky, this results in a relatively large head unit, which may in turn limit certain applications of the snake arm.

"The 'Elephant Trunk' Manipulator, Design and Implementation" by M W Hannan and I D Walker (Dept. of Electrical and Computer Engineering, Clemson University) discloses a multi-link robot arm. Each segment is controlled by a pair of control cables, each control cable having first and second ends respectively attached to first and second sides of a distal link member. Each control cable is looped around a control wheel. The first and second ends of the control cables are selectively tensioned by actuators, which rotate the respective control wheel in first or second directions. Such an arrangement requires only two actuators in order to provide two degrees of freedom, rather than three actuators, as required by earlier designs.

However, such a design results in complex kinematics. Where the link members are connected by a flexible cable or a joint located between the adjacent link members, such that pivoting movement is provided at a mid-point generally equidistant from adjacent link members, it has been found that one of the cables becomes slack when the segment is pivoted away from the longitudinal axis of the segment. This results in unwanted play in the robot arm, which reduces the accuracy of movement. This problem is solved by the design described by Hannan and Walker using a complex system of pulleys and springs to compensate for the lack of tension in one of the wires when the respective segment is moved away from a longitudinal axis. However, such an arrangement occupies an excessive amount of space, and is relatively complex to build and maintain, and therefore expensive.

It is therefore desirable to provide a multi-link robot arm having a relatively narrow diameter, while also having a large length, a large degree of flexibility, and capable of carrying a relatively high load at its distal end. It is also desirable to produce a robot arm having a compact head unit, but which provides accurate control of the movement, and does not experience the above described slack cable problem. The present invention provides a multi-link robot arm which solves some or all of the above problems.

According to a first aspect of the present invention there is provided a multi-jointed robot arm comprising at least first and second link members connected by a connection arrangement, and a first control cable, a first end of the first control cable engaging with a first engagement point of the first link member and a first attachment point of the second link member, and a second end of the first cable engaging with a second engagement point of the first link member spaced from the first engagement point, and a second attachment point of the second link member spaced from the first attachment point, the assembly further comprising a first actuator configured to selectively tension the first end of the first control cable such that the second link member pivots toward a first side, and to selectively tension the second end of the first control cable such that the second link member pivots toward a second side, wherein the connection arrangement is arranged to pivot at a first pivot point located substantially along a notional line extending between the first and second attachment points, and to pivot at a second pivot point extending between the first and second engagement points.

Advantageously, the arrangement of the present invention solves the abovementioned kinematics problem by providing pivoting movement along lines extending between the attachment points and engagement points. As a result, the invention provides pivoting of the link members without resulting in one or more slack cables, and with a relatively simple and inexpensive arrangement.

The arm may comprise a second control cable. A first end of the second control cable may engage with a third engagement point of the first link member and a third attachment point of the second link member, and a second end of the second cable may engage with a fourth engagement point of the first link member spaced from the third engagement point, and a fourth attachment point of the second link member spaced from the third attachment point.

The first, second, third and fourth attachment points may together define an attachment plane which may extend substantially perpendicular to a longitudinal axis extending between the first and second link members. The assembly may further comprise a second actuator configured to selectively tension the first end of the second control cable such that the second link member pivots toward a third side, and to selectively tension the second end of the second control cable such that the second link member pivots toward a fourth side. The first pivot point may be co-planar with the attachment plane.

The first, second, third and fourth engagement points may together define an engagement plane which may extend substantially perpendicular to a longitudinal axis extending between the first and second link members. The second pivot point may be co-planar with the engagement plane

Advantageously, only two actuators are required in order to provide pivoting movement of the link members in two axes, i.e. to any position around the longitudinal axis. Furthermore, pivoting movement in two axes can be provided with only two actuators, and without a substantial amount of slack being introduced into any of the cables.

The or each actuator may comprise a rotor, and the or each cable may be looped around a respective rotor, such rotation of the rotor in a first direction causes tensioning of the first end of the respective cable, and rotation of the rotor in a second direction causes tensioning of the second end of the respective cable.

The connection arrangement may comprise a rigid element located between a pair of pivotable portions, each pivotable portion providing pivotable movement at the respective first or second pivot point between a respective end of the rigid element and the respective one of the pair of link members.

Advantageously, the provision of a rigid element located between a pair of pivotable portions between each pair of link members solves the problem of one of the cables becoming slack when adjacent link members are pivoted relative to each other, which would otherwise be the case if the rigid element were to pivot about a point away from the plane of the attachment points of the cables. The combination of a rigid element located between a pair of flexible elements also provides an arrangement which is relatively flexible, and has a large number of degrees of freedom for each segment.

The rigid element may comprise a rigid rod, which may be hollow. The pivotable portions may comprise a flexible rod. A first part of each flexible rod may be located within the rigid rod, and a second part of the flexible rod may extend from each end of the rigid rod to provide the respective pivotable portions.

The rigid portion may have a length approximately 6 to 8 times the length of the pivotable portions.

The rigid rod may comprise a rigid plastic or metal. The flexible rod may comprise an elastic material, and may comprise one of a group selected from carbon fibre, carbon fibre reinforced plastic, glass fibre, glass fibre reinforced plastic and a super elastic material such as nickel titanium alloy (Nitinol).

Each link member may comprise a recess which is recessed from the notional line between the attachment points of the respective ends of the cables. Each flexible rod may be attached to the respective link member within the recess. The depth of the recess relative to the notional line between the attachment points may be approximately half the length of the pivotable portions.

Advantageously, the relative lengths and positions of the pivotable portions and connection points of the control cables ensures that the pivot point of the pivotable portions remains co-planar with the attachment points of the control cables.

Each pivotable portion may comprise a first connector pivotally connected to a second connector by a first pivot such that the first and second connectors pivot about a first axis, and a third connector pivotally connected to the second connector by a second pivot such that the second and third connectors pivot about the second axis substantially perpendicular to the first axis. Each pivot may comprise a pair of pivot members, and may comprise an elastic material, and may comprise one of a group selected from carbon fibre, carbon fibre reinforced plastic, glass fibre, glass fibre reinforced plastic and a super elastic material such as nickel titanium alloy (Nitinol). Alternatively, the pivot may comprise a thin section of material.

Advantageously, the pivotable portions are relatively robust, and the assembly is therefore resistant to twisting forces, enabling larger loads to be carried by the distal end of the robot arm. Such arrangement allows a large number of degrees of freedom for each segment, thereby providing a relatively flexible robot arm.

Alternatively, each pivotable portion may comprise a single body connector having first, second and third body portions, the first body portion being connected to the second body portion by a thin walled section configured to provide pivotable movement in a first axis, the third body portion being connected to the second body portion by a thin walled section configured to provide pivotable movement in a second axis substantially perpendicular to the first axis.

Advantageously, the pivotable portions are relatively inexpensive to manufacture, and yet are still relatively robust and resistant to twisting forces.

Each pivotable portion may comprise a spring element configured to permit movement along the longitudinal axis of the arm. Advantageously, the spring element permits a further degree of freedom in the direction of the longitudinal axis of the arm, thereby enabling further flexibility.

### Brief Description of the Drawings

Figure 1 is a perspective view of an assembly in accordance with the present invention;
Figure 2 is a closeup perspective view of the area C of Figure 1;
Figure 3a is a perspective view of part of the assembly of Fig. 1 , and Figures 3b and 3c are cross sectional views of the part of the assembly shown in Figure 3a in first and second positions respectively;
Figure 4 is a perspective view of a second assembly in accordance with the present invention;
Figure 5 is a cross sectional view of the area D of Fig 4;
Figure 6 is a perspective view of the area E of Figure 5;
Figure 7 is a perspective view of part of an alternative joint assembly for use in the assembly of Figure 4;
Figure 8 is a perspective view similar to that of Figures 2 and 5, but of a third assembly in accordance with the present invention;
Figure 9 is a perspective view of the area F of Figure 8;
Figure 10 is a perspective view of part of a fourth assembly in accordance with the invention;
Figure 11 is a perspective view of the area G of Figure 10;
Figure 12 is a cross sectional view through the line A-A of Figure 11;
Figure 13 is a view of part of a fifth assembly in accordance with the invention; and
Figures 14a and 14b show perspective views of the area H of Figure 13 in first and second positions respectively.

### Detailed Description

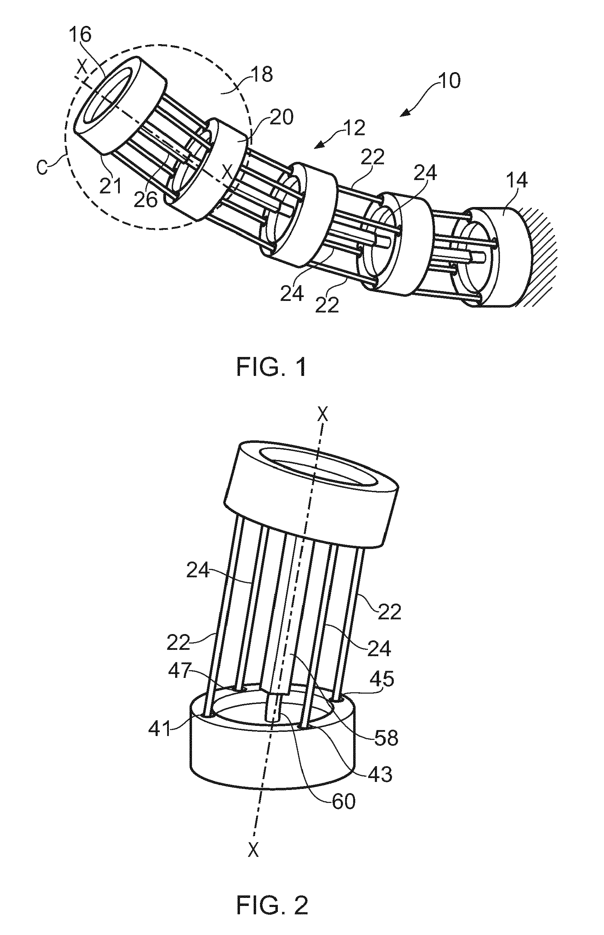

Figures 1 to 3 show a first multi-jointed robot arm assembly 10.

The assembly 10 comprises at least one arm segment 12. The assembly 10 may include further segments 12 joined to one or both of proximal 14 and distal 16 ends of the segment 12.

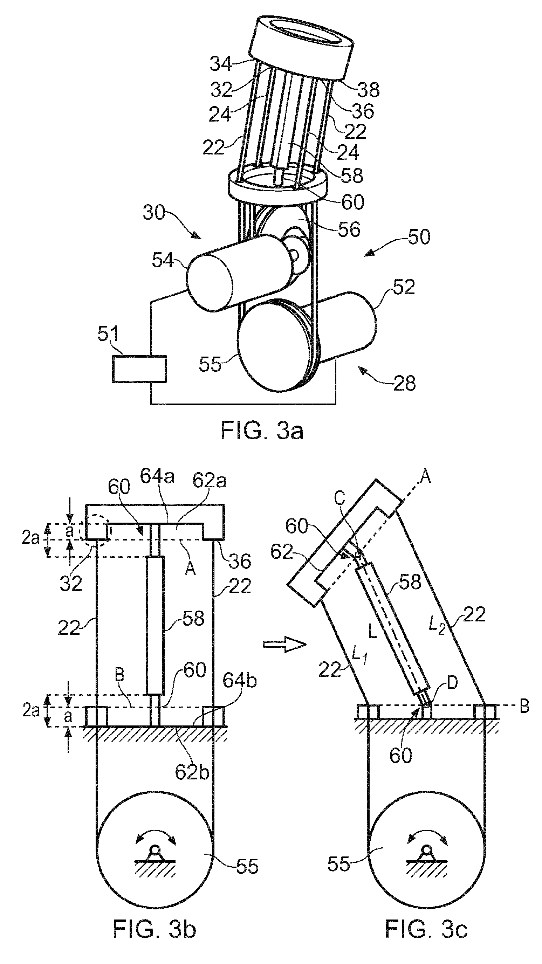

Each segment 12 comprises a plurality of joint sections 18. Each joint section 18 comprises a pair of link members comprising a proximal link member 20 and a distal link member 21. As can be seen from Fig. 1, the proximal link member 20 forms the distal link member 21 of an adjacent, proximal joint section 18. Each segment 12 further comprises at least one control cable (in this embodiment, first and second control cables 22, 24 are provided) and a connection arrangement 26 for pivotably connecting the link members 20, 21 of each joint section 18 together. Each control cable 22, 24 has first 32, 34 and second 36, 38 ends respectively, which are secured to the distal link member 21 of the distal joint 18 of the respective segment 12, as shown particularly in Figs. 3b and 3c at attachment points 32, 34, 36, 38. The attachment points define an attachment plane A which extends generally perpendicularly to a longitudinal axis X of the joint section 18. Each control cable 22, 24 slidably extends through the proximal link members 20 through openings provided at engagement points 41, 43, 45, 47. The engagement points 41, 43, 45, 47 are coplanar, and define an engagement plane B. The control cables 22, 24 extend through the proximal end 16 of the segment 12 toward a head unit 50.

The head unit 50 comprises first and second actuators 28, 30 and a controller 51. Each actuator 28, 30 comprises a respective motor 52, 54 configured to rotate a respective rotor 55, 56 around which is looped a respective control cable 22, 24.

Details of the connection arrangement are shown in Figs. 3b and 3c, in which a joint section 18 is shown in first and second positions. The connection arrangement comprises a rigid portion located between adjacent link members 20, 21 each end of the rigid portion being pivotally connected to the respective adjacent link member 20, 21 by a pivotable portion which is configured to provide pivotable movement between the respective ends of the rigid portion and the adjacent link member 20. In the embodiment shown in Figs. 1 to 3, the rigid portion comprises a rigid hollow rod 58 having a longitudinal axis extending along the longitudinal axis X, normal to the attachment planes A, B, and being parallel to and equidistant from each of the cables 22, 24. The rod 58 is made of a relatively rigid material such as any of a plastics material or metal, such that the rod 58 does not bend to a significant extent during normal use of the robot arm 10.

The pivotable portion comprises an elastic rod 60 which passes through a through passage of the rigid rod 58. A distal end of the elastic rod 60 extends from the distal end of the rigid rod 58 into a recess 62a in the distal link member 21, which is recessed relative to the attachment plane A. An end of the elastic rod 60 contacts an inner surface 64 of the recess 62a. Similarly, a proximal end of the elastic rod 60 extends from the proximal end of the rigid rod 58 into a recess 62b in the distal link member 21, which is recessed relative to the engagement plane B. As can be seen in Fig. 3b, the length of the rigid rod 58 parallel to the longitudinal axis X is less than the spacing between the inner surfaces 64a, 64b of the respective recesses 62a, 62b of adjacent link members 20, thereby leaving a gap 2a either end of the rigid rod 58. The distance between the attachment plane A and the inner surface 64a normal to the attachment plane A is shown in Fig. 3b as "a". The same distance "a" is also provided between the other end of the rigid rod 58 and the engagement plane B. The length of each pivotable portion is therefore 2a.

Referring to Fig. 3c, the joint section 18 can be pivoted from the first position to the second position by rotation of the rotor 54 in an anti-clockwise direction as shown in Fig. 3c by actuation of the motor 52. This rotation increases the tension in the end 32 (i.e. the left side as shown in Fig. 3c) of the control cable 22, thereby sliding the first side of the first control cable 22 downwards through the engagement points and pulling on the attachment points, thereby reducing the length l₁ of the first end of the control cable 22. At the same time, the tension on the second end 36 of the control cable 22 is reduced, thereby allowing the second side of the control cable 22 to increase in length I₂. Due to the location of the attachment points 40, 42 of the ends of the control cable 22, this causes the distal link member 21 of the joint 18 to pivot in an anti-clockwise direction (i.e. to the left as shown in Fig. 3c). This pivoting movement is accommodated by bending of the elastic rod 60 at either end at pivot points C, D. Similarly, pivoting in the opposite direction can be provided by rotation of the rotor 55 in a clockwise direction.

Due to the arrangement of the connection arrangement, and in particular the positioning and length of the pivotable and rigid portions of the connection arrangement relative to the attachment plane A and the engagement plane B, the pivotable portions are configured to pivot at points C, D which are co-planar with the attachment plane A, and engagement plane B, and are substantially equidistant from the respective attachment points 40 - 46. Consequently, as the joint section 18 pivots between the first and second positions, the overall length I₁ + I₂ of the cable 22 remains the same at all angles up to the maximum deflection that can be provided (typically approximately 9 to 15° for each joint, and up to 90° for each segment). Pivotable movement about a second axis perpendicular to the first axis can be provided by selectively tensioning first and second ends 34, 38 of the second cable 24 by rotation of the second rotor 56.

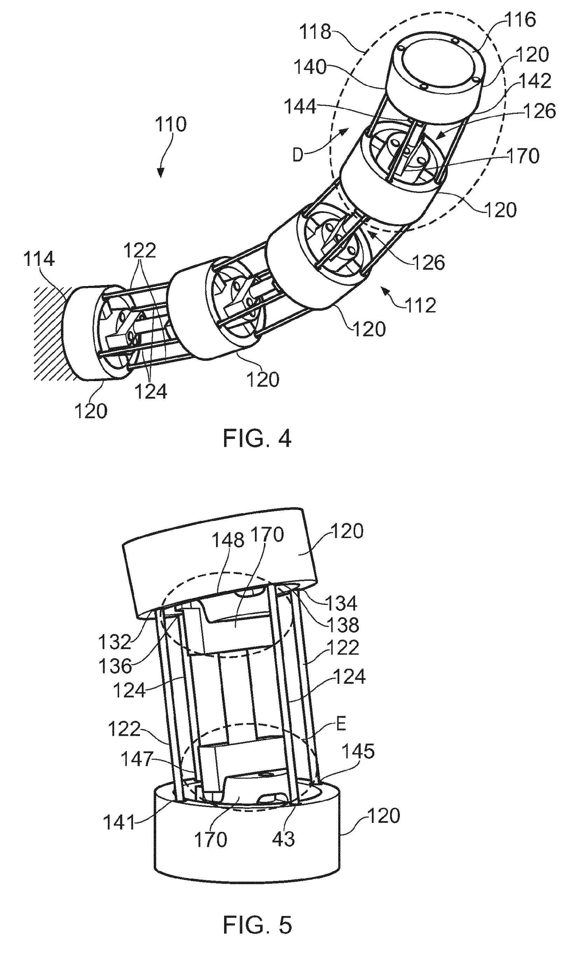

Figs. 4 to 6 show a second assembly 110. The second assembly 110 is similar to the first assembly 10, comprising at least one arm segment 112, each arm segment having a plurality of joint sections 118, each joint section 118 comprising a pair of link members 120, 121. The apparatus 110 further comprises first and second control cables 122, 124, and each joint 118 comprises a connection arrangement 126 for pivotably connecting the link members 120 of each joint section 118 together. Again, each control cable 122, 124 has first 132, 134 and second 136, 138 ends respectively, which are attached to and engage with the link members 120 in a similar manner to that of the first apparatus 10. The cables 122, 124 are controlled by a head unit similar to the head unit 50.

The connection arrangement 126 of the second assembly 110 comprises rigid and flexible portions in a similar arrangement to that of the first assembly 10. The rigid portion comprises a rigid rod 158 similar to the rod 58 of the first assembly, but need not be hollow. The pivotable portions differ from those of the first assembly 10.

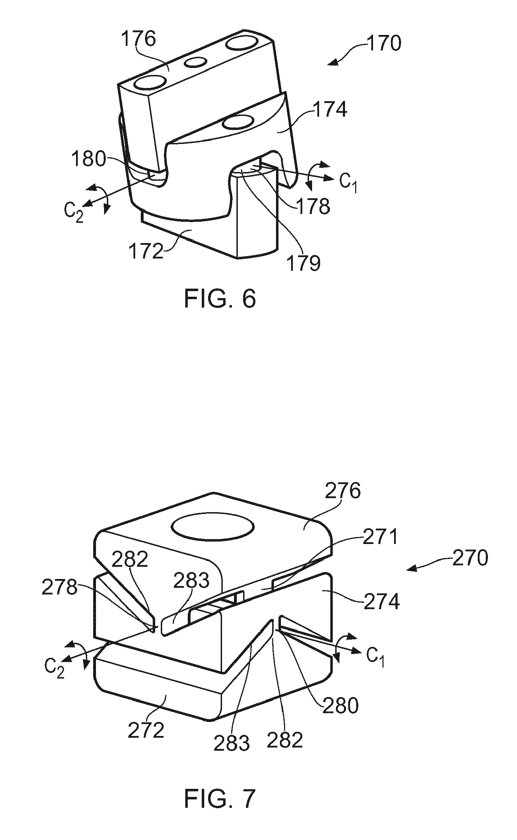

The pivotable portions each comprise a joint assembly 170 comprising first, second 174 and third 176 connectors, as shown in Fig. 6. The first connector 172 is attached to the adjacent link member 120, 121 and is pivotally connected to the second connector 174 by a first pivot 178 such that the first and second connectors 172, 174 pivot about a first axis C₁. The first axis C₁ is coplanar with a respective attachment plane A, B, and extends equidistant to the attachment points. The first pivot 178 comprises a pair of pivot members 179 located at either side of the first connector 172, each of which comprises an elastic material, such as carbon fibre, carbon fibre reinforced plastic, glass fibre or glass fibre reinforced plastic, or a super elastic material such as nickel titanium alloy (Nitinol). The relatively wide separation of the pivot members 179 prevents twisting of the pivotable portion in use.

The third connector 176 is attached to the rigid rod 158, and is pivotally connected to the second connector 174 by a second pivot 180 such that the second and third connectors 174, 176 pivot about an axis C₂ substantially perpendicular to the axis C₁, and coplanar with the adjacent attachment plane A and engagement plane B.

Consequently, as the joint section 118 pivots between the first and second positions, the length l₂ + l₂ remains the same at all angles up to the maximum deflection that can be provided due to the position of the axes C₁, C₂ relative to the planes A and B. Again, due to the provision of two pivots, the joint section 118 is able to pivot about two axes.

Fig. 7 shows an alternative joint assembly 270 for use in the assembly 110. The joint assembly 270 is similar to the joint assembly 170, and comprises first, second and third connectors 272, 274, 276. However, the connectors 272, 274, 276 are integrally formed. The first and second connectors 272, 274, and the second and third connectors 274, 276 are joined to one another by first and second pivots 278, 280 respectively.

Each pivot 278, 280 comprises a pair of pivot members which each comprise a thin section of material. A gap is provided either side of each pivot member such that the connectors 272, 274, 276 are able to pivot relative to one another.

Again, the connectors 272, 274, 276 are shaped such that the pivot axes C₁, C₂ of the pivots 278, 280 is coplanar with the adjacent attachment plane A or engagement plane B. This is achieved by providing a triangular shaped protrusion 282 on the first and third connectors 272, 276 which projects into a correspondingly shaped recess 283 in either side of the second connector 274, the pivots 278, 280 being provided at the apex of the respective protrusions 282. The apexes are oriented perpendicular to one another, such that the axes C₁, C₂ of each pivot 278, 280 crosses perpendicular to the other.

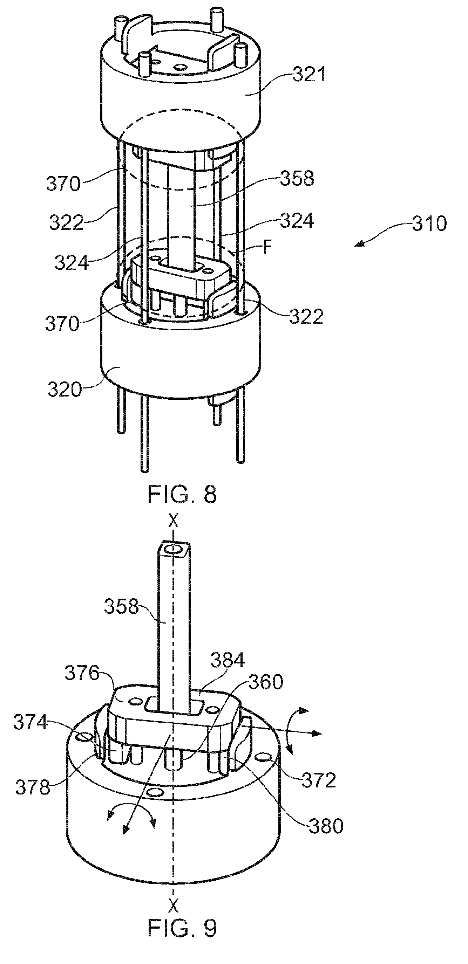

Figs. 8 and 9 show parts of a third assembly 310. The assembly is similar to the assemblies 10, 110, 210, but has a different connection arrangement, and essentially combines features from the assemblies 10, 110. As before, the connection arrangement comprises rigid and pivotable portions.

The rigid portion comprises a hollow rigid rod 358. The rod 358 has a non-circular cross section, and in this embodiment has a square cross section, though other non-circular cross sections such as oval or polygonal cross sections could be employed.

The pivotable portion comprises an elastic rod 360 made of a similar material to the rod 60 of the assembly 10. The elastic rod 360 passes through a through passage of the rigid rod 370, and is attached to a recess provided in proximal and distal links 320, 321 at either end, in a similar manner to the assembly 10.

The pivotable portion also comprises a joint assembly 370 at proximal and distal ends, which is similar to the joint assembly 170, having first, second and third connectors 372, 374, 376, and first and second pivots 378, 380, which provide pivotable movement about axes which are coplanar with the attachment axes of the control cables. The combination of an elastic rod 360 and a joint assembly 370 provides

The joint assembly 370 further differs from the joint assembly 170 of the second assembly 110 in that the rigid rod 358 is slidably attached to the first connector 372 by a non-circular aperture 384. The non-circular aperture 384 corresponds to the cross section of the rigid rod 358, such that in this embodiment, the aperture 384 has a square or rectangular cross section. An end part of the rigid rod 358 is received within the aperture 384 in each respective joint assembly. The rigid rod 358 is prevented from freely rotating within the aperture 384 by the edges of the aperture 384 and rod 358. Consequently, the link members 320, 321 are prevented from twisting about the longitudinal axis X. The sliding fit of the rod 358 within the aperture 384 permits movement of the rod 358 along the longitudinal axis X, while allows a further degree of freedom.

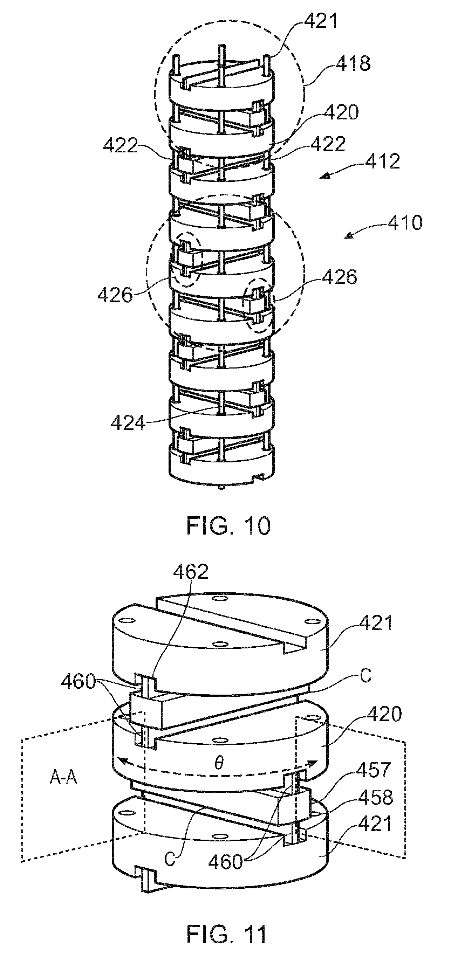

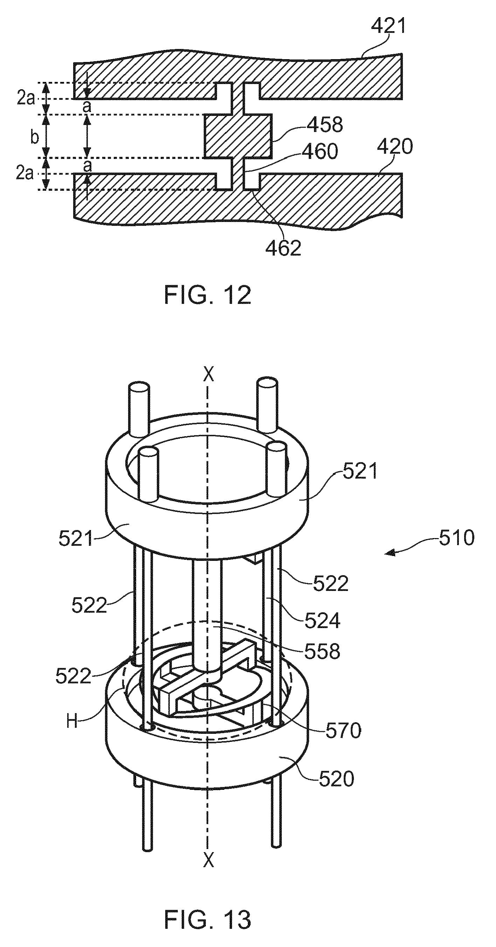

Figs. 10 to 12 show a fourth assembly 410. Fig. 12 shows a single segment 412 comprising a plurality of joint section 418. Each joint section 418 comprises a pair of link members 420, 421. The link members 420, 421 are separated by a distance b + 2a such that they are located closer together compared to those of assemblies 10, 110, 210, 310, and are joined by a connection arrangement 426. Consequently, a larger number of joint sections 418 are required for a segment 412 having a given length. Pivoting movement of the link members 420, 421 is controlled by a pair of control cables 422, 424, attached to the link members 420, 421 in a similar manner to the previous arrangements. In this embodiment, the link members 420, 421 and connection arrangement 426 of segment 412 are integrally formed.

Fig. 13 shows two joint sections 418 in more detail. The link members 420, 421 of each joint section 418 are integrally formed, and are linked together by a connection arrangement 426. The connection arrangement 426 comprises rigid and pivotable portions, which are arranged to relatively pivot the link members 420, 421 of each joint section 418 at pivot axes which lie in the plane of the attachment plane and engagement plane of the control cables.

In this embodiment, the rigid and pivotable portions comprise an integrally formed rod 457 located between adjacent link members 420, 421. The rod 457 comprises a rigid portion 458 having a width less than that of the link members 420, 421, but greater than that of a pair of elastic portions 460 located either side of the rigid portion 458. The elastic portions 460 are connected to the adjacent link members 420, 421 within a recess 462, and have a length "2a" approximately twice the depth "a" of the recess 462 such that the link members are caused to pivot about axes which lie in the plane of the attachment plane and engagement plane of the control cables. The rigid portion 358 has a sufficient thickness such that it is substantially rigid, and a length "b" sufficient to bridge the gap between the elastic portions 460 and the link members 420, 421.

Each rod 457 has a depth "c" which extends parallel to the planes A, B, and extends from one side of the link members to the other. Consequently, the elastic portions 460 are substantially rigid normal to the axis of the depth "c", and so each joint section 418 is able to pivot about one axis only, i.e. parallel to the depth "c".

Alternate joint sections 418 have a depth "c" normal each other, but coplanar with the planes A, B, such that each joint section 418 pivots about an axis normal to the adjacent joint section 418. Consequently, pivoting movement of the segment 412 is provided in both directions. Such an arrangement provides many of the advantages of previous embodiments, and also has the further advantage that it can be produced using mass manufacturing techniques such as vacuum forming, electro-discharge machining (EDM) and 3D printing.

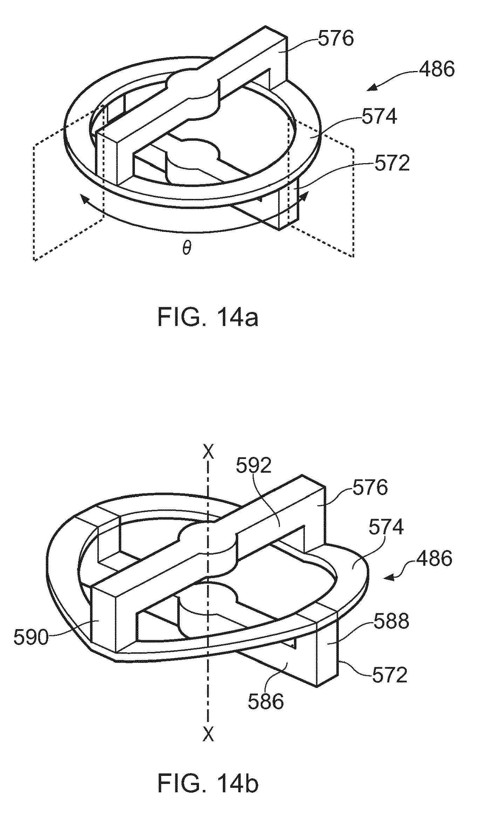

Figs. 13 and 14 show a fifth assembly 510. The assembly 510 is similar to the assembly 110, but comprises a joint assembly 570 which allows some limited movement along the longitudinal axis X.

The joint assembly 570 comprises an integral leaf spring assembly 586, shown in further detail in a first longitudinal position in Fig. 14a, and a second longitudinal position in Fig. 14b.

The leaf spring assembly 586 comprises first, second and third connectors 572, 574, 576. The first connector 572 comprises an elongate web 586 which lies parallel with the plane A and is attached to the proximal link member 520, and a pair of upstanding finger members 588 extending longitudinally from opposite ends of the web 586.

The finger members 588 are attached to a proximal side of the second connector 574, which is in the form of a generally toroidal spring member 574. The toroidal spring member 574 is in turn attached to finger members 590 of a third connector 578. The third connector 578 is similar to the first connector 574 having a web 592 and a pair of finger members 590, but with the finger members 590 extending in a proximal direction. The web 592 extends in a direction angle θ to the web 586 relative to the longitudinal axis X.

The joint arrangement 518 is formed of a resilient material such as a plastics material. This arrangement permits the joint arrangement 518 to pivot about axes normal to one another, coincident with the planes A and B of the attachment points of the control cables, and also to move between a first longitudinal position as shown in Fig. 14a to a second longitudinal position as shown in Fig. 14b when a longitudinal force is applied.

Accordingly, the invention provides a multi-joint assembly which can be controlled in any direction about the longitudinal axis using only two actuators, yet is relatively strong and inexpensive to produce.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For example, different materials could be used in construction.

## Claims

1. A multi-jointed robot arm comprising at least first and second link members connected by a connection arrangement, and a first control cable, a first end of the first control cable engaging with a first engagement point of the first link member and a first attachment point of the second link member, and a second end of the first cable engaging with a second engagement point of the first link member spaced from the first engagement point, and a second attachment point of the second link member spaced from the first attachment point, the assembly further comprising a first actuator configured to selectively tension the first end of the first control cable such that the second link member pivots toward a first side, and to selectively tension the second end of the first control cable such that the second link member pivots toward a second side, wherein the connection arrangement is arranged to pivot at a first pivot point located substantially along a notional line extending between the first and second attachment points, and to pivot at a second pivot point extending between the first and second engagement points.

2. An assembly according to claim 1, wherein the arm comprises a second control cable.

3. An assembly according to claim 2, wherein a first end of the second control cable engages with a third engagement point of the first link member and a third attachment point of the second link member, and a second end of the second cable engages with a fourth engagement point of the first link member spaced from the third engagement point, and a fourth attachment point of the second link member spaced from the third attachment point.

4. An assembly according to claim 3, wherein the first, second, third and fourth attachment points together define an attachment plane which extends substantially perpendicular to a longitudinal axis extending between the first and second link members.

5. An assembly according to claim 3 or claim 4, wherein the assembly comprises a second actuator configured to selectively tension the first end of the second control cable such that the second link member pivots toward a third side, and to selectively tension the second end of the second control cable such that the second link member pivots toward a fourth side.

6. An assembly according to claim 4 or claim 5, wherein the first pivot point is co-planar with the attachment plane.

7. An assembly according to any of claims 3 to 6, wherein the first, second, third and fourth engagement points together define an engagement plane which extends substantially perpendicular to a longitudinal axis extending between the first and second link members.

8. An assembly according to any of the preceding claims, wherein the or each actuator comprises a rotor, the or each cable being looped around a respective rotor, such rotation of the rotor in a first direction causes tensioning of the first end of the respective cable, and rotation of the rotor in a second direction causes tensioning of the second end of the respective cable.

9. An assembly according to any of the preceding claims, wherein the connection arrangement comprises a rigid element located between a pair of pivotable portions, each pivotable portion providing pivotable movement at the respective first or second pivot point between a respective end of the rigid element and the respective one of the pair of link members.

10. An assembly according to claim 9, wherein each of the pivotable portions comprises a flexible rod.

11. An assembly according to claim 10, wherein each link member comprises a recess which is recessed from the notional line between the attachment points of the respective ends of the cables, each flexible rod being attached to the respective link member within the recess.

12. An assembly according to claim 11, wherein the depth of the recess relative to the notional line between the attachment points is approximately half the length of the pivotable portions.

13. An assembly according to any of claims 9 to 12, wherein each pivotable portion comprises a first connector pivotally connected to a second connector by a first pivot such that the first and second connectors pivot about a first axis, and a third connector pivotally connected to the second connector by a second pivot such that the second and third connectors pivot about the second axis substantially perpendicular to the first axis.

14. An assembly according to any of the preceding claims, wherein each control cable slidably extends through respective openings provided at the respective engagement points.
